# EUROPEAN PATENT APPLICATION

(11) **EP 4 703 155 A1**
(43) Date of publication of application: **04.03.2026**
(21) Application number: 25191735.7
(22) Date of filing: 25.07.2025
(51) Int. Cl.: B60C 11/03

(54) **TIRE**

(30) Priority: 30.08.2024 JP 2024150118
(71) Applicant: Sumitomo Rubber Industries, Ltd., Kobe-shi, Hyogo 651-0072 (JP)
(72) Inventor: MUTO, Yusuke, 651-0072 Kobe-shi (JP)
(74) Representative: Manitz Finsterwald Patent- und Rechtsanwaltspartnerschaft mbB

(57) **Abstract**

The present invention relates to a tire 1 including a tread portion 2. The tread portion 2 has a plurality of circumferential grooves 3 extending in a tire circumferential direction, and a plurality of land portions 4 demarcated by the circumferential grooves 3. The circumferential grooves 3 include a first circumferential groove 3A which has a narrow groove portion 3a opened with a small groove width w1 at a ground contact surface 2a and has a wide portion 3b having a great groove width w2 on a side inward of the narrow groove portion 3a in a tire radial direction. The land portions 4 adjacent to the first circumferential groove 3A have a plurality of lateral components 5 including at least one of lateral grooves and lateral sipes connected to the narrow groove portion 3a. The narrow groove portion 3a has a plurality of connection portions 3c at which the lateral components 5 are connected. At least one of the connection portions 3c is provided with a longitudinal hole 6 opened, at the ground contact surface 2a, with a width greater than the groove width w1 of the narrow groove portion 3a in a tire axial direction.

## Description

### BACKGROUND OF THE INVENTION

### Field of the Invention

The present invention relates to a tire having a tread portion.

### Background Art

To date, a tire having a tread portion that allows achievement of both wet performance and wear resistance has been known. For example, Japanese Laid-Open Patent Publication No. 2015-209124 suggests a heavy duty tire which has main grooves that zigzag and sipes that are inclined.

However, in recent years, expectations for enhanced wet performance and wear resistance have been increasing, and even the tire disclosed in Japanese Laid-Open Patent Publication No. 2015-209124 is expected to be further improved.

The present invention has been made in view of the abovementioned circumstances, and a main object of the present invention is to provide a tire which can achieve both wet performance and wear resistance at a high level.

### SUMMARY OF THE INVENTION

The present invention is directed to a tire including a tread portion. The tread portion has a plurality of circumferential grooves extending in a tire circumferential direction, and a plurality of land portions demarcated by the plurality of circumferential grooves. The plurality of circumferential grooves include at least one first circumferential groove which has a narrow groove portion opened with a small groove width at a ground contact surface, and has a wide portion having a great groove width on a side inward of the narrow groove portion in a tire radial direction. At least one of the plurality of land portions adjacent to the first circumferential groove has a plurality of lateral components including at least one of lateral grooves and lateral sipes connected to the narrow groove portion. The narrow groove portion has a plurality of connection portions at which at least one of the plurality of lateral components is connected. At least one of the plurality of connection portions is provided with a longitudinal hole opened, at the ground contact surface, with a width greater than the groove width of the narrow groove portion in a tire axial direction.

The tire of the present invention has the above-described configuration, and thus allows achievement of both wet performance and wear resistance at a high level.

### BRIEF DESCRIPTION OF THE DRAWINGS

FIG. 1 is a development showing a tread portion of a tire according to one embodiment of the present invention;
FIG. 2 is a cross-sectional view taken along a line A-A in FIG. 1; and
FIG. 3 is an enlarged view of a part B in FIG. 1.

### DETAILED DESCRIPTION

One embodiment of the present invention will be described below in detail with reference to the drawings.

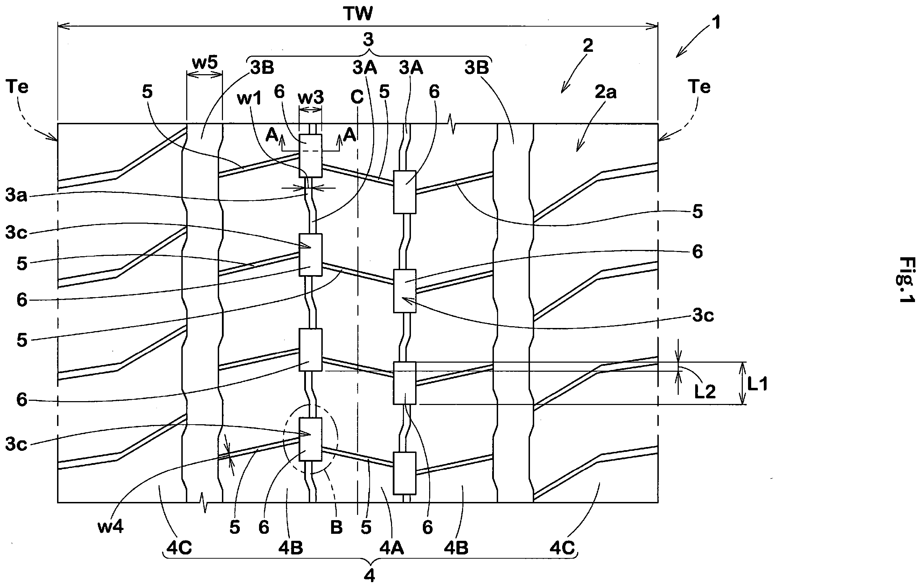

FIG. 1 is a tread development of a tread portion 2 of a tire 1 according to the present embodiment. As shown in FIG. 1, the tire 1 of the present embodiment has the tread portion 2. Preferable examples of the tire 1 include a heavy duty pneumatic tire. However, the tire 1 is not limited thereto, and is applicable to various tires 1 such as a pneumatic tire for a passenger car, an airless tire, and a tire for an industrial machine.

The tread portion 2 of the present embodiment has a plurality of circumferential grooves 3 extending in the tire circumferential direction, and a plurality of land portions 4 demarcated by the plurality of circumferential grooves 3. The tread portion 2 having such a configuration can inhibit deformation of the land portion 4 during contact with the ground, and contributes to enhancement of rolling resistance performance and wear resistance of the tire 1.

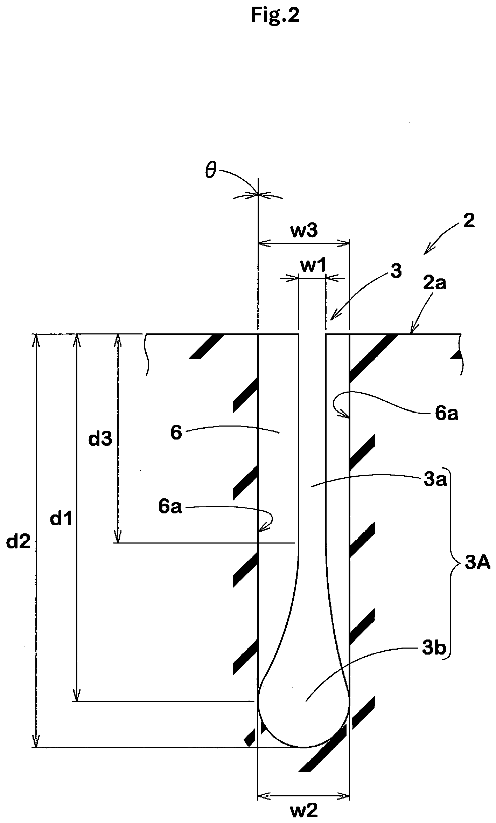

FIG. 2 is a cross-sectional view taken along a line A-A in FIG. 1. As shown in FIG. 1 and FIG. 2, the plurality of circumferential grooves 3 include at least one first circumferential groove 3A which has a narrow groove portion 3a opened with a small groove width w1 at a ground contact surface 2a. In the present embodiment, the circumferential grooves 3 include two first circumferential grooves 3A. In the present embodiment, each of the first circumferential grooves 3A has a wide portion 3b having a great groove width w2 on a side inward of the narrow groove portion 3a in the tire radial direction.

The first circumferential groove 3A having such a configuration allows the land portions 4 adjacent to the narrow groove portion 3a to come into contact with each other when a load is applied, and can thus inhibit deformation of the land portions 4 during contact with the ground, so that rolling resistance performance and wear resistance of the tire 1 can be enhanced. Furthermore, since the groove width of the wide portion 3b is increased at the late stage of wear, the wide portion 3b inhibits degradation of drainage performance at the late stage of wear, and contributes to enhancement of wet performance of the tire 1.

In this specification, dimensions and the like of components of the tire 1 are represented as values measured in a standardized state unless otherwise specified. Here, in a case where the tire 1 is a pneumatic tire, the "standardized state" refers to a state where the tire 1 is mounted on a standardized rim and adjusted to have a standardized internal pressure, and no load is applied to the tire 1.

In a case where a standard system including a standard on which the tire 1 is based is provided, the "standardized rim" represents a rim defined for each tire by the standard. Examples of the standardized rim include the "standard rim" in the JATMA standard, the "Design Rim" in the TRA standard, and the "Measuring Rim" in the ETRTO standard. In a case where a standard system including a standard on which the tire 1 is based is not provided, the "standardized rim" represents a rim which has the smallest rim width among rims on which the tire 1 can be mounted and which do not cause air leakage and have the smallest rim diameter.

In a case where a standard system including a standard on which the tire 1 is based is provided, the "standardized internal pressure" represents an air pressure defined for each tire by the standard. Examples of the standardized internal pressure include the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. In a case where a standard system including a standard on which the tire 1 is based is not provided, the "standardized internal pressure" represents an air pressure defined for each tire by a manufacturer or the like.

In the present embodiment, at least one of the plurality of land portions 4 adjacent to the first circumferential groove 3A has a plurality of lateral components 5 connected to the narrow groove portion 3a. The lateral components 5 having such a configuration can enhance drainage performance in cooperation with the first circumferential groove 3A, and thus contributes to enhancement of wet performance of the tire 1.

FIG. 1 shows an example in which the lateral components 5 are composed of lateral sipes. However, the lateral components 5 are not limited thereto. As long as the lateral components 5 include at least one of lateral grooves and lateral sipes, for example, the lateral components 5 may be composed of lateral grooves or composed of both lateral grooves and lateral sipes. Here, each of the lateral sipes refers to a cut portion having a width w4 of less than 1.0 mm in a direction orthogonal to the longitudinal direction thereof, and is clearly distinguished from a lateral groove having a groove width of 1.0 mm or more.

In a case where the lateral components 5 are lateral sipes, the stiffness of the tread portion 2 in the tire circumferential direction can be enhanced, and thus wear resistance of the tire 1 can be enhanced. In a case where the lateral components 5 are lateral grooves, excellent drainage performance is provided, and thus wet performance of the tire 1 can be enhanced.

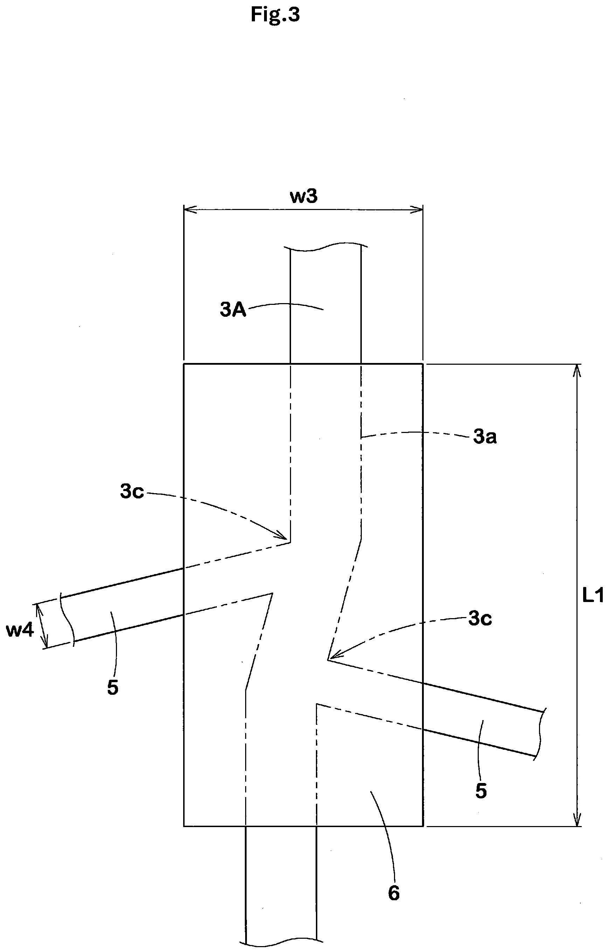

FIG. 3 is an enlarged view of a part B in FIG. 1. As shown in FIG. 1 to FIG. 3, in the present embodiment, the narrow groove portion 3a has a plurality of connection portions 3c at which at least one of the plurality of lateral components 5 is connected. **In** FIG. 3, for the purpose of explanation, the connection portions 3c are represented by an alternate long and two short dashes line. The connection portions 3c having such a configuration contributes to enhancement of drainage performance in cooperation with the first circumferential groove 3A and the lateral components 5.

It is preferable that at least one of the plurality of connection portions 3c is provided with a longitudinal hole 6 opened, at the ground contact surface 2a, with a width w3 greater than the groove width w1 of the narrow groove portion 3a in the tire axial direction. The longitudinal hole 6 having such a configuration can enhance drainage performance in cooperation with the first circumferential groove 3A and the lateral components 5 while maintaining high stiffness of the tread portion 2. Therefore, the tire 1 of the present embodiment allows achievement of both wet performance and wear resistance at a high level.

**In** a more preferable mode, the longitudinal hole 6 is provided to all of the plurality of connection portions 3c. The longitudinal hole 6 having such a configuration has a high arrangement density, so that drainage performance can be further enhanced.

The longitudinal hole 6 is, for example, formed in a polygonal shape in a plan view. The longitudinal hole 6 of the present embodiment is formed in a rectangular shape in a plan view. The longitudinal hole 6 having such a configuration can exhibit a great edge effect, and thus contributes to enhancement of wet performance of the tire 1. It is noted that the longitudinal hole 6 is not limited thereto, and may include, for example, a curved part.

As shown in FIG. 2, the longitudinal hole 6 has a wall surface 6a extending in the tire radial direction. The angle θ of the wall surface 6a with respect to the tire radial direction is preferably 20° or less. In a case where the angle θ of the wall surface 6a is 20° or less, the drainage performance can be enhanced while maintaining high stiffness of the tread portion 2, thus contributing to achievement of both wet performance and wear resistance of the tire 1 at a high level. From such a viewpoint, the angle θ of the wall surface 6a is more preferably 15° or less.

In the present embodiment, the longitudinal hole 6 extends to the wide portion 3b in the tire radial direction. It is preferable that the longitudinal hole 6 is smoothly connected to the wide portion 3b. The longitudinal hole 6 having such a configuration can further enhance drainage performance in cooperation with the wide portion 3b.

The maximum width w3 of the longitudinal hole 6 is preferably equal to or greater than the groove width w2 of the wide portion 3b. In a case where the longitudinal hole 6 extends to the wide portion 3b, the width of the longitudinal hole 6 at a part connecting to the wide portion 3b is preferably equal to the groove width w2 of the wide portion 3b. The longitudinal hole 6 having such a configuration allows drainage to be efficiently performed in cooperation with the wide portion 3b, and contributes to achievement of both stiffness and drainage performance of the tread portion 2.

The depth d1 of the longitudinal hole 6 in the tire radial direction is preferably 90% or more of the groove depth d2 of the first circumferential groove 3A in the tire radial direction. In a case where the depth d1 of the longitudinal hole 6 is 90% or more of the groove depth d2 of the first circumferential groove 3A, the longitudinal hole 6 can be maintained until the late stage of wear, so that the drainage performance can be enhanced. From such a viewpoint, the depth d1 of the longitudinal hole 6 is more preferably 93% or more of the groove depth d2 of the first circumferential groove 3A.

The depth d1 of the longitudinal hole 6 is preferably 100% or less of the groove depth d2 of the first circumferential groove 3A. In a case where the depth d1 of the longitudinal hole 6 is 100% or less of the groove depth d2 of the first circumferential groove 3A, high stiffness of the tread portion 2 can be maintained, so that misidentification of the wear limit is also prevented. From such a viewpoint, the depth d1 of the longitudinal hole 6 is more preferably 97% or less of the groove depth d2 of the first circumferential groove 3A.

Thus, the depth d1 of the longitudinal hole 6 is preferably 90 to 100% of the groove depth d2 of the first circumferential groove 3A and more preferably 93 to 97% thereof. Combination of the upper limit value and the lower limit value in these numerical ranges can be discretionarily selected.

As shown in FIG. 1 and FIG. 3, in the present embodiment, the maximum length L1 of the longitudinal hole 6 in the tire circumferential direction at the ground contact surface 2a is greater than the maximum width w3 of the longitudinal hole 6 in the tire axial direction at the ground contact surface 2a. For example, a long side of the rectangular shape of the longitudinal hole 6 is disposed along the tire circumferential direction. The longitudinal hole 6 having such a configuration can make the volume thereof large while maintaining stiffness of the tread portion 2 in the tire axial direction, and thus allows achievement of both lateral stiffness and drainage performance of the tread portion 2.

The maximum length L1 of the longitudinal hole 6 is preferably 5% or more of the tread width TW. In a case where the maximum length L1 of the longitudinal hole 6 is 5% or more of the tread width TW, the opening area relative to the ground contact surface 2a can be assured at a certain level or more, so that drainage performance can be enhanced. From such a viewpoint, the maximum length L1 of the longitudinal hole 6 is more preferably 7% or more of the tread width TW.

The maximum length L1 of the longitudinal hole 6 is preferably 15% or less of the tread width TW. In a case where the maximum length L1 of the longitudinal hole 6 is 15% or less of the tread width TW, high stiffness of the tread portion 2 can be maintained, which also contributes to reduction in uneven wear or tread cracking. From such a viewpoint, the maximum length L1 of the longitudinal hole 6 is more preferably 10% or less of the tread width TW.

Thus, the maximum length L1 of the longitudinal hole 6 is preferably 5 to 15% of the tread width TW and more preferably 7 to 10% thereof. Combination of the upper limit value and the lower limit value in these numerical ranges can be discretionarily selected.

The maximum length L1 of the longitudinal hole 6 is preferably 3 or more times the width w4 orthogonal to the longitudinal direction of the lateral component 5. In a case where the maximum length L1 of the longitudinal hole 6 is 3 or more times the width w4 of the lateral component 5, the opening area relative to the ground contact surface 2a can be assured at a certain level or more, so that drainage performance can be enhanced. From such a viewpoint, the maximum length L1 of the longitudinal hole 6 is more preferably 4 or more times the width w4 of the lateral component 5.

The maximum length L1 of the longitudinal hole 6 is preferably 10 or less times the width w4 of the lateral component 5. In a case where the maximum length L1 of the longitudinal hole 6 is 10 or less times the width w4 of the lateral component 5, high stiffness of the tread portion 2 can be maintained, which also contributes to reduction in uneven wear or tread cracking. From such a viewpoint, the maximum length L1 of the longitudinal hole 6 is more preferably 7 or less times the width w4 of the lateral component 5.

Thus, the maximum length L1 of the longitudinal hole 6 is preferably 3 to 10 times the width w4 of the lateral component 5 and more preferably 4 to 7 times the width w4. Combination of the upper limit value and the lower limit value in these numerical ranges can be discretionarily selected.

The maximum width w3 of the longitudinal hole 6 is preferably 3% or more of the tread width TW. In a case where the maximum width w3 of the longitudinal hole 6 is 3% or more of the tread width TW, the opening area relative to the ground contact surface 2a can be assured at a certain level or more, so that drainage performance can be enhanced. From such a viewpoint, the maximum width w3 of the longitudinal hole 6 is more preferably 4% or more of the tread width TW.

The maximum width w3 of the longitudinal hole 6 is preferably 6% or less of the tread width TW. In a case where the maximum width w3 of the longitudinal hole 6 is 6% or less of the tread width TW, high stiffness of the tread portion 2 can be maintained, which also contributes to reduction in uneven wear or tread cracking. From such a viewpoint, the maximum width w3 of the longitudinal hole 6 is more preferably 5% or less of the tread width TW.

Thus, the maximum width w3 of the longitudinal hole 6 is preferably 3 to 6% of the tread width TW and more preferably 4 to 5%. Combination of the upper limit value and the lower limit value in these numerical ranges can be discretionarily selected.

The groove width w1 of the narrow groove portion 3a of the first circumferential groove 3A is preferably 2% or less of the tread width TW. In a case where the groove width w1 of the narrow groove portion 3a is 2% or less of the tread width TW, the adjacent land portions 4 are allowed to come into contact with each other when a load is applied, and deformation of the land portions 4 can be inhibited during contact with the ground, so that rolling resistance performance and wear resistance of the tire 1 can be enhanced.

The groove width w2 of the wide portion 3b of the first circumferential groove 3A is preferably 3% or more of the tread width TW. In a case where the groove width w2 of the wide portion 3b is 3% or more of the tread width TW, degradation of drainage performance at the late stage of wear can be inhibited, so that wet performance of the tire 1 can be enhanced.

As shown in FIG. 2, the groove depth d3 of the narrow groove portion 3a in the tire radial direction is preferably 40% or more of the groove depth d2 of the first circumferential groove 3A. In a case where the groove depth d3 of the narrow groove portion 3a is 40% or more of the groove depth d2 of the first circumferential groove 3A, deformation of the land portion 4 can be assuredly inhibited during contact with the ground. From such a viewpoint, the groove depth d3 of the narrow groove portion 3a is more preferably 50% or more of the groove depth d2 of the first circumferential groove 3A.

The groove depth d3 of the narrow groove portion 3a is preferably 80% or less of the groove depth d2 of the first circumferential groove 3A. In a case where the groove depth d3 of the narrow groove portion 3a is 80% or less of the groove depth d2 of the first circumferential groove 3A, the volume of the wide portion 3b can be increased, and degradation of drainage performance at the late stage of wear can be assuredly inhibited. From such a viewpoint, the groove depth d3 of the narrow groove portion 3a is more preferably 70% or less of the groove depth d2 of the first circumferential groove 3A.

Thus, the groove depth d3 of the narrow groove portion 3a is preferably 40 to 80% of the groove depth d2 of the first circumferential groove 3A and more preferably 50 to 70% thereof. Combination of the upper limit value and the lower limit value in these numerical ranges can be discretionarily selected.

As shown in FIG. 1, the plurality of circumferential grooves 3 include, for example, a second circumferential groove 3B having a groove width w5 greater than the groove width w1 of the narrow groove portion 3a of the first circumferential groove 3A. In the present embodiment, the first circumferential groove 3A is disposed inward of the second circumferential groove 3B in the tire axial direction.

In the first circumferential groove 3A having such a configuration, the narrow groove portion 3a is disposed in an inner side part, in the tire axial direction, on which a high load acts, so that wear resistance of the tire 1 can be effectively enhanced. Meanwhile, the second circumferential groove 3B having such a configuration contributes to enhancement of drainage performance owing to the great groove width w5. Furthermore, in the first circumferential groove 3A, the longitudinal hole 6 is disposed in an inner side part, in the tire axial direction, where the ground contact length is great, so that drainage performance can be further effectively enhanced.

The groove width w5 of the second circumferential groove 3B is preferably 3% or more of the tread width TW. In a case where the groove width w5 of the second circumferential groove 3B is 3% or more of the tread width TW, drainage performance can be enhanced, and wet performance of the tire 1 can be enhanced.

Each of the first circumferential groove 3A and the second circumferential groove 3B, for example, zigzags in the tire circumferential direction. However, the first circumferential groove 3A and the second circumferential groove 3B are not limited thereto, and may, for example, extend linearly in the tire circumferential direction. In the present embodiment, in the first circumferential groove 3A, the narrow groove portion 3a zigzags in the tire circumferential direction, and the wide portion 3b extends linearly in the tire circumferential direction. The first circumferential groove 3A and the second circumferential groove 3B having such configurations are suitable for allowing achievement of both wet performance and wear resistance of the tire 1 at a high level.

FIG. 1 illustrates an example in which the plurality of circumferential grooves 3 include a pair of the first circumferential grooves 3A and a pair of the second circumferential grooves 3B. That is, in the present embodiment, the plurality of circumferential grooves 3 include the first circumferential groove 3A on one side and the first circumferential groove 3A on the other side, which are disposed adjacent to each other in the tire axial direction.

The first circumferential groove 3A on the one side and the first circumferential groove 3A on the other side are, for example, disposed on both sides of the tire equator C. However, the first circumferential grooves 3A are not limited thereto. The pair of the first circumferential grooves 3A may be, for example, disposed on one side of the tire equator C. Each pair formed from among three or more of the first circumferential grooves 3A may have the following relationship of a pair of the first circumferential grooves 3A.

The "tire equator C" refers to the center position between a pair of tread ends Te in the tire axial direction on the ground contact surface 2a. The "tread end Te" refers to an outermost ground contact position in the tire axial direction in a state where a standardized load is applied to the tire 1 in a standardized state and the tire 1 is brought into contact with a plane at a camber angle of 0° when the tire 1 is a heavy duty pneumatic tire.

In a case where a standard system including a standard on which the tire 1 is based is provided, the "standardized load" represents a load defined for each tire by the standard. Examples of the standardized load include the "maximum load capacity" in the JATMA standard, the maximum value recited in the table "TIRE LOAD LIMITS AT VARIOUS COLD INFLATION PRESSURES" in the TRA standard, and the "LOAD CAPACITY" in the ETRTO standard. In a case where a standard system including a standard on which the tire 1 is based is not provided, the "standardized load" represents a load defined for each tire by a manufacturer or the like as the maximum load that is applicable when the tire 1 is used.

In the present embodiment, the longitudinal hole 6 of the first circumferential groove 3A on the one side and the longitudinal hole 6 of the first circumferential groove 3A on the other side are provided at different positions in the tire circumferential direction. The first circumferential grooves 3A having such a configuration can inhibit the occurrence of pattern noise since the phases of the longitudinal holes 6 are different, and noise performance of the tire 1 can be enhanced.

The overlapping length L2, in the tire circumferential direction at the ground contact surface 2a, over which the longitudinal hole 6 of the first circumferential groove 3A on the one side and the longitudinal hole 6 of the first circumferential groove 3A on the other side overlap each other, is preferably 70% or less of the maximum length L1 of the longitudinal hole 6. In a case where the overlapping length L2 is 70% or less of the maximum length L1 of the longitudinal hole 6, the occurrence of pattern noise can be assuredly inhibited. From such a viewpoint, the overlapping length L2 is more preferably 30% or less of the maximum length L1 of the longitudinal hole 6.

The plurality of land portions 4 include, for example, five land portions 4 demarcated by the four circumferential grooves 3. In the present embodiment, the plurality of land portions 4 include a first land portion 4A demarcated between the pair of the first circumferential grooves 3A, a pair of second land portions 4B demarcated between the first circumferential grooves 3A and the second circumferential grooves 3B, and a pair of third land portions 4C demarcated between the second circumferential grooves 3B and the tread ends Te.

Each of the plurality of lateral components 5 preferably extends across any one of the plurality of land portions 4. In the present embodiment, each of the plurality of lateral components 5 extends across either the first land portion 4A or the second land portion 4B. The lateral components 5 having such a configuration can further enhance drainage performance in cooperation with the circumferential grooves 3 on both sides in the tire axial direction.

The land ratio of the tread portion 2 is preferably 75% or more. In a case where the land ratio of the tread portion 2 is 75% or more, the rubber volume of the tread portion 2 can be sufficiently assured, and stiffness of the tread portion 2 can be increased. From such a viewpoint, the land ratio of tread portion 2 is more preferably 77% or more.

The land ratio of the tread portion 2 is preferably 90% or less. In a case where the land ratio of the tread portion 2 is 90% or less, sufficient drainage performance can be assured, and chipping, cracking, or the like caused by excessively high stiffness of the tread portion 2 can be inhibited. From such a viewpoint, the land ratio of the tread portion 2 is more preferably 85% or less.

Thus, the land ratio of the tread portion 2 is preferably 75 to 90% and more preferably 77 to 85%. Combination of the upper limit value and the lower limit value in these numerical ranges can be discretionarily selected.

The land ratio of the tread portion 2 refers to the proportion of the actual ground contact area to a virtual ground contact area obtained by filling all the grooves and the longitudinal holes 6 provided in the tread portion 2. The grooves with a groove width of 1 mm or less or a groove depth of 3 mm or less are considered to substantially come into contact with the ground, and are included in this actual ground contact area.

Although the particularly preferable embodiments of the present invention have been described above in detail, the present invention is not limited to the above-described embodiments, and various modifications can be made to implement the present invention.

### [Additional notes]

The present invention is as follows.

### [Present invention 1]

A tire including
a tread portion, wherein
the tread portion has a plurality of circumferential grooves extending in a tire circumferential direction, and a plurality of land portions demarcated by the plurality of circumferential grooves,
the plurality of circumferential grooves include at least one first circumferential groove which has a narrow groove portion opened with a small groove width at a ground contact surface, and has a wide portion having a great groove width on a side inward of the narrow groove portion in a tire radial direction,
at least one of the plurality of land portions adjacent to the first circumferential groove has a plurality of lateral components including at least one of lateral grooves and lateral sipes connected to the narrow groove portion,
the narrow groove portion has a plurality of connection portions at which at least one of the plurality of lateral components is connected, and
at least one of the plurality of connection portions is provided with a longitudinal hole opened, at the ground contact surface, with a width greater than the groove width of the narrow groove portion in a tire axial direction.

### [Present invention 2]

The tire according to the present invention 1, wherein the longitudinal hole is provided to all of the plurality of connection portions.

### [Present invention 3]

The tire according to the present invention 1 or 2, wherein a maximum length of the longitudinal hole in the tire circumferential direction at the ground contact surface is greater than a maximum width of the longitudinal hole in the tire axial direction at the ground contact surface.

### [Present invention 4]

The tire according to the present invention 3, wherein the maximum length of the longitudinal hole is 5 to 15% of a tread width.

### [Present invention 5]

The tire according to the present invention 3 or 4, wherein the maximum width of the longitudinal hole is 3 to 6% of the tread width.

### [Present invention 6]

The tire according to any one of the present inventions 1 to 5, wherein
the plurality of circumferential grooves include a second circumferential groove having a groove width greater than the groove width of the narrow groove portion of the first circumferential groove, and
the first circumferential groove is disposed inward of the second circumferential groove in the tire axial direction.

### [Present invention 7]

The tire according to any one of the present inventions 1 to 6, wherein
the plurality of circumferential grooves include the first circumferential groove on one side and the first circumferential groove on another side, which are disposed adjacent to each other in the tire axial direction, and
the longitudinal hole of the first circumferential groove on the one side and the longitudinal hole of the first circumferential groove on the other side are provided at different positions in the tire circumferential direction.

### [Present invention 8]

The tire according to the present invention 7, wherein an overlapping length, in the tire circumferential direction at the ground contact surface, over which the longitudinal hole of the first circumferential groove on the one side and the longitudinal hole of the first circumferential groove on the other side overlap, is 70% or less of the maximum length of the longitudinal hole in the tire circumferential direction at the ground contact surface.

### [Present invention 9]

The tire according to any one of the present inventions 1 to 8, wherein each of the plurality of lateral components extends across any one of the plurality of land portions.

### [Present invention 10]

The tire according to any one of the present inventions 1 to 9, wherein a land ratio of the tread portion is 75 to 90%.

## Claims

1. A tire (1) comprising
a tread portion (2), wherein
the tread portion (2) has a plurality of circumferential grooves (3) extending in a tire circumferential direction, and a plurality of land portions (4) demarcated by the plurality of circumferential grooves (3),
the plurality of circumferential grooves (3) include at least one first circumferential groove (3A) which has a narrow groove portion (3a) opened with a small groove width (w1) at a ground contact surface (2a), and has a wide portion (3b) having a great groove width (w2) on a side inward of the narrow groove portion (3a) in a tire radial direction,
at least one of the plurality of land portions (4) adjacent to the first circumferential groove (3A) has a plurality of lateral components (5) including at least one of lateral grooves and lateral sipes connected to the narrow groove portion (3a),
the narrow groove portion (3a) has a plurality of connection portions (3c) at which at least one of the plurality of lateral components (5) is connected, and
at least one of the plurality of connection portions (3c) is provided with a longitudinal hole (6) opened, at the ground contact surface (2a), with a width greater than the groove width (w1) of the narrow groove portion (3a) in a tire axial direction.

2. The tire (1) according to claim 1, wherein the longitudinal hole (6) is provided to all of the plurality of connection portions (3c).

3. The tire (1) according to claim 1 or 2, wherein a maximum length (L1) of the longitudinal hole (6) in the tire circumferential direction at the ground contact surface (2a) is greater than a maximum width (w3) of the longitudinal hole (6) in the tire axial direction at the ground contact surface (2a).

4. The tire (1) according to claim 3, wherein the maximum length (L1) of the longitudinal hole (6) is 5 to 15% of a tread width (TW).

5. The tire (1) according to claim 3 or 4, wherein the maximum width (w3) of the longitudinal hole (6) is 3 to 6% of the tread width (TW).

6. The tire (1) according to any one of claims 1 to 5, wherein
the plurality of circumferential grooves (3) include a second circumferential groove (3B) having a groove width (w5) greater than the groove width (w1) of the narrow groove portion (3a) of the first circumferential groove (3A), and
the first circumferential groove (3A) is disposed inward of the second circumferential groove (3B) in the tire axial direction.

7. The tire (1) according to any one of claims 1 to 6, wherein
the plurality of circumferential grooves (3) include the first circumferential groove (3A) on one side and the first circumferential groove (3A) on another side, which are disposed adjacent to each other in the tire axial direction, and
the longitudinal hole (6) of the first circumferential groove (3A) on the one side and the longitudinal hole (6) of the first circumferential groove (3A) on the other side are provided at different positions in the tire circumferential direction.

8. The tire (1) according to claim 7, wherein an overlapping length (L2), in the tire circumferential direction at the ground contact surface (2a), over which the longitudinal hole (6) of the first circumferential groove (3A) on the one side and the longitudinal hole (6) of the first circumferential groove (3A) on the other side overlap each other, is 70% or less of the maximum length (L1) of the longitudinal hole (6) in the tire circumferential direction at the ground contact surface (2a).

9. The tire (1) according to any one of claims 1 to 8, wherein each of the plurality of lateral components (5) extends across any one of the plurality of land portions (4).

10. The tire (1) according to any one of claims 1 to 9, wherein a land ratio of the tread portion (2) is 75 to 90%.
